(19) Europäisches Patentamt
European Patent Office
Office européen des brevets

(11) **EP 2 790 041 A1**

(12) **EUROPÄISCHE PATENTANMELDUNG**

(43) Veröffentlichungstag:
**15.10.2014 Patentblatt 2014/42**

(51) Int Cl.:
***G01V 8/20*** *(2006.01)*

(21) Anmeldenummer: **14158243.7**

(22) Anmeldetag: **07.03.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.04.2013 DE 102013103718**

(71) Anmelder: **SICK AG**
**79183 Waldkirch (DE)**

(72) Erfinder:
• **Kietz, Daniel**
**79359 Riegel (DE)**
• **Bürger, Jürgen**
**79331 Nimburg (DE)**

(74) Vertreter: **Hehl, Ulrich**
**SICK AG**
**Intellectual Property**
**Erwin-Sick-Strasse 1**
**79183 Waldkirch (DE)**

(54) **Optoelektronischer Sensor und Verfahren zur Erfassung von in einer Bewegungsrichtung beförderten Objekten**

(57) Es wird ein optoelektronischer Sensor (10) zur Erfassung von Objekten (28) mit in einer ersten Richtung geringer Ausdehnung angegeben, der mindestens eine Sendeeinheit (12) mit einer Vielzahl von Lichtsendern (14), mindestens eine erste Empfangseinheit (16a) und eine zweite Empfangseinheit (16b) mit jeweils einer Vielzahl von Lichtempfängern (18) und eine Auswertungseinheit (26) aufweist, die mit den Lichtempfängern (16) verbunden ist, um deren Empfangssignale auszuwerten, wobei die Lichtsender (14) und Lichtempfänger (18) zwischen sich jeweils paarweise durch Aussenden und Empfangen von Licht einen Überwachungsstrahl (20) aufspannen und die Überwachungsstrahlen (20) ein erstes Überwachungsfeld (22a) zueinander paralleler Überwachungsstrahlen (20) zwischen der Sendeeinheit (12) und der ersten Empfangseinheit (16a) und ein zweites Überwachungsfeld (22b) paralleler Überwachungsstrahlen (20) zwischen der Sendeeinheit (12) und der zweiten Empfangseinheit (16b) bilden, wobei die Auswertungseinheit (26) anhand der Empfangssignale Unterbrechungen der Überwachungsstrahlen (20) und dadurch die Anwesenheit des Objekts (28) in einem Überwachungsfeld (22a-b) erkennt. Dabei stehen das erste Überwachungsfeld (22a) und das zweite Überwachungsfeld (22b) durch entsprechende Orientierung von Sendeeinheit (12) und Empfangseinheiten (16a-b) in einem Winkel (2α) zueinander, so dass die erste Richtung in zumindest einem Überwachungsfeld (22a-b) nicht senkrecht zu den Überwachungsstrahlen (20) steht.

Figur 3

EP 2 790 041 A1

**Beschreibung**

Die Erfindung betrifft einen optoelektronischen Sensor und ein Verfahren zur Erfassung von Objekten mit in einer ersten Richtung geringer Ausdehnung nach dem Oberbegriff von Anspruch 1 beziehungsweise 8.

Lichtgitter umfassen eine Vielzahl von Sendeelementen und zugeordneten Empfangselementen, so dass jeweils ein Paar aus einem Sendeelement und einem Empfangselement eine Lichtschranke bildet, die erkennt, ob der zwischen dem Sendeelement und dem Empfangselement aufgespannte Lichtstrahl von einem Objekt unterbrochen ist oder nicht. Die Sendeelemente und Empfangselemente sind jeweils in einer Sendeeinheit und einer Empfangseinheit zusammengefasst, die einander gegenüber montiert werden.

Ein herkömmliches Anwendungsfeld für Lichtgitter ist die Sicherheitstechnik. Die parallelen Lichtstrahlen dienen dabei als eine Art virtuelle Wand, und bei Unterbrechung durch ein Objekt wird beispielsweise eine Gefahrenquelle abgesichert. In der Automatisierungstechnik werden Lichtgitter eingesetzt, um die Ausdehnung von Objekten anhand der Anzahl unterbrochener Strahlen zu messen. Beispielsweise kann auf diesem Weg die Höhe von auf einem Förderband bewegten Objekten bestimmt werden, und zwar mit einer Genauigkeit, die durch den Abstand der Lichtstrahlen gegeben ist.

Lichtgitter können auch verwendet werden, um Teile zu zählen, die beispielsweise aus einer Standmaschine ausgeworfen werden. Das Lichtgitter wird dann so angeordnet, dass seine Überwachungsebene ein horizontales Fenster überdeckt, durch welches die Teile hindurchfallen. Hier eignet sich ein Lichtgitter vor allem dann, wenn die Teile keine genau vorhersagbare Bewegungsbahn verfolgen und deshalb nicht immer an der gleichen Stelle, sondern nur innerhalb eines gewissen Bereichs vermessen oder gezählt werden können.

Ein Lichtgitter kann aber nur Teile erfassen, die eine gewisse Mindestgröße aufweisen. Zum einen liegt dies daran, dass ein Lichtgitter ohne zusätzliche Maßnahmen nur ein Auflösungsvermögen besitzt, welches dem Strahlabstand entspricht. Wesentlich kritischer noch ist es, wenn ein Objekt zu dünn ist, um einen Strahl vollständig abzudecken. Es gibt Anwendungen, in denen Objekte erfasst werden sollen, welche die erforderlichen Mindestgrößen in zwei Dimensionen, nicht jedoch in der dritten Dimension besitzen, beispielsweise dünne Bleche. Solche Objekte werden also nicht in jeder Lage und Orientierung erfasst und können sich in einer ungünstigen Orientierung durch das Lichtgitter bewegen, bei welcher das Objekt dem Lichtsender beziehungsweise Lichtempfänger gerade seine Schmalseite zuwendet und deshalb den Strahl nur teilweise unterbricht. Gerade im freien Fall von Objekten lässt sich diese ungünstige Orientierung nicht vermeiden, so dass die Erfassung unzuverlässig wird.

Es sind unterschiedliche Verfahren bekannt, um das Auflösungsvermögen eines Lichtgitters zu verbessern. Dazu zählt die Erhöhung der Strahldichte oder auch die sogenannte Kreuzstrahltechnik, bei welcher zusätzliche Überwachungsstrahlen zwischen nicht direkt einander zugeordneten Lichtsendern und Lichtempfängern aufgespannt werden. Die Auflösung erhöht sich durch derartige Maßnahmen aber nur innerhalb der Überwachungsebene und löst damit nicht das Problem der Erfassung von dünnen Objekten in ungünstiger Orientierung.

Teilabdeckungen eines Überwachungsstrahls können prinzipiell durch eine energetische Auswertung oder durch ein Absenken der Schaltschwelle erfasst werden, anhand derer ein unterbrochener Strahl erkannt wird. Dann führt bereits eine Teilabdeckung zum Erkennen des Objekts. Da hierbei bereits sehr kleine Empfangssignaländerungen detektiert werden müssen, reagiert das Lichtgitter dann aber äußerst empfindlich auf Störungen und Verschmutzungen, so dass die angestrebte zuverlässige Erfassung nicht erreicht wird.

Es ist bekannt, ein Lichtgitter gegenüber einem Objektstrom schräg zu stellen. Das löst aber das Problem ebenfalls nicht, solange die Orientierung der Objekte im Moment der Erfassung nicht festgelegt ist. Man verschiebt damit lediglich die zuvor bei senkrechter Anordnung des Lichtgitters nicht erfassbare Orientierung der Objekte auf eine andere Orientierung.

Es ist daher Aufgabe der Erfindung, die Zuverlässigkeit der Objekterfassung in einem Lichtgitter zu erhöhen.

Diese Aufgabe wird durch einen optoelektronischen Sensor und ein Verfahren zur Erfassung von Objekten mit in einer ersten Richtung geringer Ausdehnung nach Anspruch 1 beziehungsweise 8 gelöst. Ein solches Objekt ist demnach dünn, insbesondere so dünn, dass die Ausdehnung in der ersten Richtung nur zu einer Teilabdeckung von Überwachungsstrahlen führt. Die erfindungsgemäße Lösung geht dann von dem Grundgedanken aus, eine günstige Orientierung des Objektes gegenüber dem Sensor zu erzwingen, so dass eine derartige Situation ausgeschlossen ist, in der die Schmalseite des Objekts einen Überwachungsstrahl nur teilweise überdeckt. Dazu werden anstelle eines einzelnen Überwachungsfelds zwei Überwachungsfelder wie von zwei Lichtgittern aufgespannt. Diese beiden Überwachungsfelder stehen X- oder V-förmig zueinander und schließen somit einen nicht rechten Winkel ein, der vorzugsweise spitz ist, also weniger als 90°, höchstens 45°, 30°, 20° oder sogar höchstens 10° beträgt.

Die beiden Überwachungsfelder können in verschiedenen Ausführungsformen durch unterschiedliche Konstellationen der Sende- und Empfangseinheiten erzeugt werden. Dabei sind verschiedene Varianten von separaten oder gemeinsam in einem Gehäuse untergebrachten Sende- und Empfangseinheiten denkbar: Es gibt beispielsweise je zwei separate Sende- und Empfangseinheiten, es sind insgesamt nur zwei Einheiten vorgesehen, die jeweils eine Zeile von Sendern und Empfängern aufweisen und zwischen einander ein gekreuztes doppeltes Überwachungsfeld aufspannen, oder die Sendeeinheit wird gemeinsam von zwei separaten Empfangseinheiten genutzt.

Die X- beziehungsweise V-förmige Orientierung der beiden Überwachungsfelder sorgt dafür, dass der ungünstige Fall, in dem die erste Richtung senkrecht zu einem Überwachungsfeld steht und das Objekt somit dessen Überwachungsstrahlen nur seine Schmalseite präsentiert, höchstens für eines der beiden Überwachungsfelder eintreten kann. Eine Erfassung scheitert dann nur noch in dem konstruierten Fall, in dem das Objekt gerade derartig rotiert, dass die erste Richtung aufgrund der Rotation jeweils bei Eintauchen in beide Überwachungsfeld senkrecht zu dem jeweiligen Überwachungsfeld tritt. Dieser Fall ist so unwahrscheinlich, dass die Zuverlässigkeit dadurch nicht beeinträchtigt wird, erst recht wenn man annimmt, dass die Objekte nicht oder jedenfalls nicht schnell rotieren. Erforderlichenfalls könnte man ein drittes Überwachungsfeld hinzufügen. Man kann dann sogar ein Modell entwerfen, wie ein Objekt rotieren müsste, um sowohl in dem ersten Überwachungsfeld als auch in dem zweiten Überwachungsfeld mit einer ersten Richtung senkrecht zu dem Überwachungsfeld einzutauchen, und den Winkel und Abstand des dritten Überwachungsfelds gezielt von einer Extrapolation derartiger Rotationen abweichen lassen.

Die Erfindung hat den Vorteil, dass auch Objekte sicher detektiert werden, die in einer Dimension die Mindestgröße zur hinreichenden Abdeckung eines Überwachungsstrahls unterschreiten. Man erhöht also die Auflösung des Sensors in einer Richtung senkrecht zu der Überwachungsebene.

Die Auswertungseinheit ist bevorzugt dafür ausgebildet, durch ein Überwachungsfeld hindurchtretende Objekte zu zählen. Das ist ein wichtiger Anwendungsfall, bei dem die Objekte lediglich binär als solche erfasst werden. Alternativ oder zusätzlich ist auch eine zumindest grobe Vermessung in einer Richtung anhand der Anzahl unterbrochener Überwachungsstrahlen denkbar. Die Auswertungseinheit kann mehrstufig aufgebaut sein. Beispielsweise wird auf einer ersten Stufe für jeden Strahl oder jede Gruppe von Strahlen anhand des jeweiligen Empfangssignals geprüft, ob ein Strahl unterbrochen ist. Eine übergeordnete Auswertung wertet dann in einem zweiten Schritt nur noch die Strahlunterbrechungen und nicht mehr die Empfangssignale aus. Auch solche mehrstufigen Auswertungen, die auch ganz oder teilweise außerhalb des Sensors vorgenommen werden können, sollen von dem Begriff Auswertungseinheit umfasst sein.

Die Auswertungseinheit ist bevorzugt dafür ausgebildet, ein anhand des zeitlichen Aufeinanderfolgens der Objekterfassungen als in mehreren Überwachungsfeldern erfasst erkanntes Objekt nur einmal zu zählen. Der kritische Fall, dass das Objekt mit der ersten Richtung senkrecht zu einem Überwachungsfeld ausgerichtet ist, tritt verhältnismäßig selten ein, da häufig schon eine geringe Schrägstellung ausreicht, um einen Überwachungsstrahl vollständig abzudecken. Dementsprechend wird es regelmäßig geschehen, dass ein Objekt in beiden Überwachungsfeldern detektiert wird, was aber nur als ein Ereignis gewertet werden soll. Die Zeit, die ein Objekt benötigt, um beide Überwachungsfelder zu passieren, ist meist bekannt, weil die Bewegungsgeschwindigkeit durch einen Förderer, einen Roboter oder den freien Fall vorgegeben wird. Wird dann nach Detektion in dem ersten Überwachungsfeld ein Objekt nach einer erwarteten Dauer auch in dem zweiten Überwachungsfeld detektiert, so handelt es sich um dasselbe Objekt. Ebenso können Zeitfenster gesetzt werden, innerhalb derer höchstens ein Ereignis eintreten darf. Solche Zeitfenster können auch anhand einer Ausgaberate einer Maschine gesetzt werden, welche die zu detektierenden Objekte erzeugt, ausgibt oder fördert.

Die Sendeeinheit weist bevorzugt Lichtsender mit einer breiten Abstrahlcharakteristik auf, so dass ihr Sendelicht sowohl die erste Empfangseinheit als auch die zweite Empfangseinheit erreicht. Es entstehen dabei sendeseitig Lichtfächer, aus denen die zugeordneten Lichtempfänger der beiden Empfangseinheiten mit ihren Empfangskeulen die Überwachungsstrahlen ausschneiden. Es ist denkbar, den ungenutzten Zwischenraum der Lichtfächer durch Blenden abzudecken oder den Lichtstrahl sendeseitig beispielsweise mit Spiegelelementen in zwei Teilstrahlen aufzuteilen, um das Sendelicht effektiver zu nutzen. Auch ein solcher Doppelstrahl soll hier mit dem Begriff breite Abstrahlcharakteristik umfasst sein. Durch solche Maßnahmen genügt eine einzige Sendeeinheit, und die beiden Empfangseinheiten können untereinander baugleich ausgeführt werden. Bei nebeneinander betriebenen unabhängigen Lichtgittern würde man nämlich herkömmlich eine Strahlcodierung einführen, damit die Zuordnung zwischen Sendern und Empfängern sichergestellt wird.

Die Lichtsender in der Sendeeinheit sind vorzugsweise alternierend auf die erste Empfangseinheit und die zweite Empfangseinheit ausgerichtet. Das ist eine alternative Bauform zu einer Sendeeinheit mit breiter Abstrahlcharakteristik, bei der jeder Lichtsender nicht zwei, sondern nur einen Überwachungsstrahl erzeugt. Die Lichtsender sitzen vorzugsweise in einer solchen Sendeeinheit doppelt so dicht wie die angestrebte Strahlauflösung in einem Überwachungsfeld, da nur jeder zweite Lichtsender einen Überwachungsstrahl zu einem bestimmten Überwachungsfeld beiträgt.

Die Sendeeinheit weist bevorzugt eine erste Sendeuntereinheit und eine davon separate zweite Sendeuntereinheit auf, wobei die erste Sendeuntereinheit mit der ersten Empfangseinheit das erste Überwachungsfeld und die zweite Sendeuntereinheit mit der zweiten Empfangseinheit das zweite Überwachungsfeld aufspannt. Dies ist nochmals eine alternative Ausführungsform, bei welcher die Sendeeinheit aus zwei separaten Untereinheiten besteht, die insbesondere auch jeweils ein eigenes Gehäuse aufweisen können. Man braucht einen höheren apparativen Aufwand, da effektiv zwei nahezu unabhängige Lichtgitter aufgebaut werden, dafür entsteht völlige Freiheit hinsichtlich der Anordnung der beiden Überwachungsfelder. Zumindest derjenige Anteil der Auswertungseinheit, welcher die Objekterkennungen auswertet und beispielsweise durchtretende Objekte zählt, bleibt vorzugsweise als gemeinsame Auswertungseinheit für alle Überwachungsstrahlen und Überwachungsfelder erhalten.

In bevorzugter Weiterbildung ist eine Anordnung einer Maschine, welche Objekte mit in einer ersten Richtung geringer Ausdehnung in eine Bewegungsrichtung befördert, und eines erfindungsgemäßen optoelektronischen Sensors zum Zählen der Objekte vorgesehen, wobei die Überwachungsfelder derart orientiert und angeordnet sind, dass die in Bewegungsrichtung beförderten Objekte die Überwachungsfelder in unterschiedlichen Winkeln durchdringen. Dabei umfasst das Befördern auch den freien Fall eines von der Maschine ausgeworfenen Objekts. Durch die V-förmige Anordnung der Überwachungsfelder quer zu der Bewegungsrichtung ist sichergestellt, dass ein dünnes Objekt äußerstenfalls in einem der beiden Überwachungsfelder die Überwachungsstrahlen nur teilabdeckt, dafür dann aber in dem anderen Überwachungsfeld sicher erkannt wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1 eine schematische Schnittdarstellung eines Lichtgitters;

Fig. 2 eine schematische Darstellung eines Objekts, das in ungünstiger paralleler Ausrichtung ein Überwachungsfeld eines herkömmlichen Lichtgitters passiert und dabei nicht erkannt wird;

Fig. 3 eine schematische Draufsicht auf eine Ausführungsform der Erfindung, in welcher zwei Überwachungsfelder V-förmig zueinander ausgerichtet sind und damit den ungünstigen Fall gemäß Figur 2 für zumindest eines der Überwachungsfelder ausschließen; und

Fig.4 eine weitere Ausführungsform mit zwei kombinierten Sende- und Empfangseinheiten.

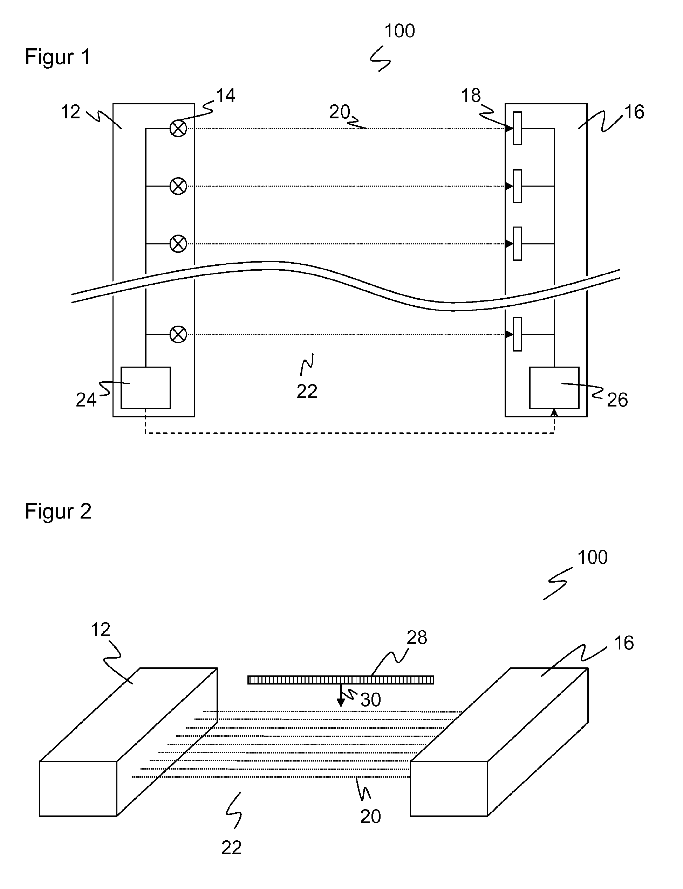

Figur 1 zeigt eine schematische Blockdarstellung eines Lichtgitters 100. Eine Sendeeinheit 12 mit einer Vielzahl von Lichtsendern 14 und eine Empfangseinheit 16 mit einer Vielzahl von Lichtempfängern 18 sind einander gegenüberstehend angeordnet. Von den Lichtsendern 14 ist jeweils ein Licht- oder Überwachungsstrahl 20 zu einem zugeordneten Lichtempfänger 18 aufgespannt. Somit spannt das Lichtgitter 100 eine Vielzahl von Überwachungsstrahlen 20 auf, um Objekte in einem Überwachungsfeld 22 zwischen der Sendeeinheit 12 und der Empfangseinheit 16 zu erkennen. Dabei kann den Lichtsendern 14 und den Lichtempfängern 18 abweichend von der Darstellung eine Optik samt Blenden oder dergleichen zugeordnet sein, um den Überwachungsstrahl 20 zu formen beziehungsweise gezielt und nur innerhalb einer bestimmten Empfangskeule auf einen Lichtempfänger 18 zu lenken.

In der Sendeeinheit 12 ist eine Sendersteuerung 24 direkt oder mittelbar mit allen Lichtsendern 14 verbunden, um deren Aktivität zu steuern und sie dazu zu veranlassen, bestimmte Signalformen auszusenden. Als Gegenstück ist in der Empfangseinheit 16 eine Auswertungseinheit 26 vorgesehen, die direkt oder mittelbar mit allen Lichtempfängern 18 verbunden ist, um die Empfangssignale auszuwerten. Anhand der Empfangssignale erkennt die Auswertungseinheit 26, welche Lichtstrahlen 20 unterbrochen sind und welche nicht.

Vorzugsweise strahlen die Lichtsender 14 nicht im Dauerbetrieb, sondern werden zyklisch nacheinander aktiviert, um Mehrdeutigkeiten in der Empfangseinheit 16 zu vermeiden. Dazu werden Sendersteuerung 24 und Auswertungseinheit 26 leitungsgebunden oder optisch synchronisiert, wie durch eine gestrichelte Linie angedeutet.

Figur 2 zeigt eine schematische Darstellung eines dünnen Objekts 28, welches sich in einer Bewegungsrichtung 30 durch das Überwachungsfeld 22 eines Lichtgitters 100 bewegt und dabei erfasst werden soll. Hier und im Folgenden bezeichnen gleiche Bezugszeichen die gleichen oder einander entsprechenden Merkmale. Dabei sind zur Vereinfachung nicht immer alle Elemente gezeigt, beispielsweise die Lichtsender 14 der Sendeeinheit 12 oder die Lichtempfänger 18 der Empfangseinheit 16.

Fällt die Dimension geringer Ausdehnung des Objekts 28, also diejenige Richtung, in der das Objekt 28 dünn ist, wie dargestellt mit der Bewegungsrichtung 30 zusammen, so führt dies dazu, dass die Überwachungsstrahlen 20 nur teilweise abgedeckt werden. Diese Orientierung des Objekts 28 wird auch als parallele Ausrichtung bezeichnet, weil die ausgedehnteren, von dem Lichtgitter 100 ohne Weiteres erfassbaren Dimensionen des Objekts 28 gerade innerhalb der Ebene des Überwachungsfeldes 22 liegen. Ein dünnes Objekt 28 mit dieser Ausrichtung wird von einem herkömmlichen Lichtgitter 100 nicht zuverlässig erfasst.

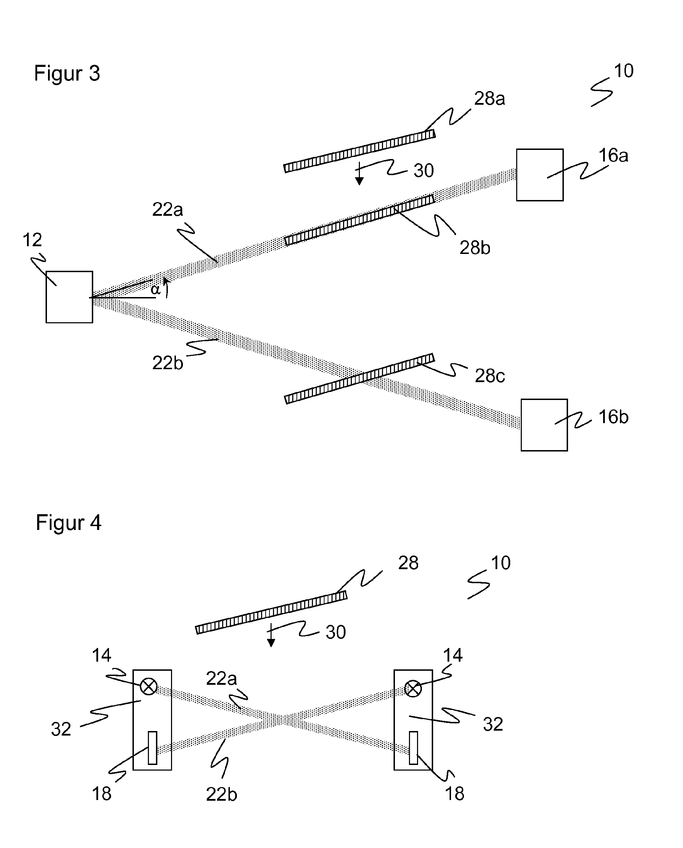

Figur 3 zeigt eine schematische Darstellung einer Ausführungsform eines erfindungsgemäßen Sensors 10, der auch dünne Objekte 28 zuverlässig detektiert. Der Sensor 10 weist eine Sendeeinheit 12 und zwei Empfangseinheiten 16a-b auf, die zwischen einander ein erstes Überwachungsfeld 22a und ein zweites Überwachungsfeld 22b aufspannen. Weitere Elemente des Sensors 10 entsprechen prinzipiell dem Lichtgitter 100 der Figur 1 und werden deshalb weder gezeigt noch näher erläutert.

Die Sendeeinheit 12 und die Empfangseinheiten 16a-b sind so montiert, dass gleichsam ein Lichtgitterpaar entsteht, welches die V-förmig zueinander orientierten Überwachungsfelder 22a-b aufspannt. Fällt nun das Objekt 28a zu einem Zeitpunkt als Objekt 28b parallel durch das eine Überwachungsfeld 22a, so ist die Lage des Objekts 28c zu einem früheren oder späteren Zeitpunkt in dem anderen Überwachungsfeld 22b nicht parallel, und das Objekt 28c kann dort zuverlässig erkannt werden.

Der halbe V-förmige Winkel, in dem die Überwachungsfelder 22a-b zueinander stehen, ist in Figur 3 mit α bezeichnet. Das dort dargestellte Objekt 28b ist zu dünn, um den Strahlengang in dem ersten Überwachungsfeld 22a abzudecken, und wird deshalb dort nicht erkannt. In dem zweiten Überwachungsfeld 22b dagegen deckt das Objekt 28c den Strahlengang vollständig ab und wird demnach erkannt. Je größer der Winkel α gewählt wird, desto dünnere beziehungsweise kürzere Objekte können detektiert werden.

Für die Mindestlänge $l_{min}$ eines Objektes, das bei Vollabdeckung des Strahls erkannt wird, gilt:

$$l_{min} = (d - h \cos\alpha) / \tan\alpha$$

mit d: Durchmesser des Überwachungsstrahls, h: Höhe des Objekts 28 (erste Richtung geringer Ausdehnung des dünnen Objekts 28) und l: Länge des Objekts 28.

Für Winkel α < 25° ist dann näherungsweise

$$l_{min} = (d - h) / \tan\alpha;$$

$$h_{min} = d - l_{min} \tan\alpha.$$

Der Winkel α wird vorzugsweise so gewählt, dass die natürliche Abstrahlcharakteristik der Lichtsender 14 beziehungsweise von deren Optik ausreicht, um sowohl die erste Empfangseinheit 16a als auch die zweite Empfangseinheit 16b zu überstreichen. Es genügt dann eine einzige Sendeeinheit 12. Eine ausreichend breite Abstrahlcharakteristik kann auch durch entsprechende Sendeoptiken erzwungen werden. Eine weitere Möglichkeit besteht darin, durch den Sendelichtstrahl durch einen Strahlteiler in zwei Teilstrahlen aufzuteilen. In nochmals anderen Aufführungsformen sind in der Sendeeinheit 12 doppelt so viele Lichtsender 14 vorhanden wie Lichtempfänger 18 in einer Empfangseinheit 16a-b, und diese Lichtsender 14 sind abwechselnd auf die eine Empfangseinheit 16a und die andere Empfangseinheit 16b ausgerichtet. Schließlich ist auch denkbar, zwei unabhängige Sendeeinheiten 12 vorzusehen. In diesem Fall müssen sich die Überwachungsfelder 22a-b anders als in Figur 3 nicht zwangsläufig berühren, und sie können auch zusätzlich in der Richtung senkrecht zur Papierebene der Figur 3 gegeneinander verkippt werden.

Figur 4 zeigt eine weitere Ausführungsform, bei der zwei kombinierte Sende- und Empfangseinheiten 32 vorgesehen sind, welche die Überwachungsfelder 22a-b als Kreuz zwischen einander aufspannen. Es sind vereinfachend nur einzelne Lichtsender 14 und Lichtempfänger 18 eingezeichnet, die sich tatsächlich jeweils in einer Linie senkrecht zu der Papierebene wiederholen. Wie schon in den Figuren 2 und 3 sind weitere, in Figur 1 gezeigte Elemente eines Lichtgitters in der Figur 4 nur zur vereinfachten Darstellung weggelassen.

**Patentansprüche**

1. Optoelektronischer Sensor (10) zur Erfassung von Objekten (28) mit in einer ersten Richtung geringer Ausdehnung, der mindestens eine Sendeeinheit (12, 32) mit einer Vielzahl von Lichtsendern (14), mindestens eine erste Empfangseinheit (16a, 32) und eine zweite Empfangseinheit (16b, 32) mit jeweils einer Vielzahl von Lichtempfängern (18) und eine Auswertungseinheit (26) aufweist, die mit den Lichtempfängern (16) verbunden ist, um deren Empfangssignale auszuwerten, wobei die Lichtsender (14) und Lichtempfänger (18) zwischen sich jeweils paarweise durch Aussenden und Empfangen von Licht einen Überwachungsstrahl (20) aufspannen und die Überwachungsstrahlen (20) ein erstes Überwachungsfeld (22a) zueinander paralleler Überwachungsstrahlen (20) zwischen der Sendeeinheit (12, 32) und der ersten Empfangseinheit (16a, 32) und ein zweites Überwachungsfeld (22b) paralleler Überwachungsstrahlen (20) zwischen der Sendeeinheit (12, 32) und der zweiten Empfangseinheit (16b, 32) bilden, wobei die Auswertungseinheit (26) anhand der Empfangssignale Unterbrechungen der Überwachungsstrahlen (20) und dadurch die Anwesenheit des Objekts (28) in einem Überwachungsfeld (22a-b) erkennt,
**dadurch gekennzeichnet,**
**dass** das erste Überwachungsfeld (22a) und das zweite Überwachungsfeld (22b) durch entsprechende Orientierung von Sendeeinheit (12, 32) und Empfangseinheiten (16a-b, 32) in einem Winkel (2α) zueinander stehen, so dass die erste Richtung in zumindest einem Überwachungsfeld (22a-b) nicht senkrecht zu den Überwachungsstrahlen (20) steht.

2. Sensor (10) nach Anspruch 1,
wobei die Auswertungseinheit (26) dafür ausgebildet ist, durch ein Überwachungsfeld (22a-b) hindurchtretende Objekte (28) zu zählen.

3. Sensor (10) nach Anspruch 2,

wobei die Auswertungseinheit (26) dafür ausgebildet ist, ein anhand des zeitlichen Aufeinanderfolgens der Objekterfassungen als in mehreren Überwachungsfeldern (22a-b) erfasst erkanntes Objekt (28) nur einmal zu zählen.

**4.** Sensor (10) nach einem der Ansprüche 1 bis 3, wobei die Sendeeinheit (12) Lichtsender (14) mit einer breiten Abstrahlcharakteristik aufweist, so dass ihr Sendelicht sowohl die erste Empfangseinheit (16a) als auch die zweite Empfangseinheit (16b) erreicht.

**5.** Sensor (10) nach einem der Ansprüche 1 bis 3, wobei die Lichtsender (14) in der Sendeeinheit (12) alternierend auf die erste Empfangseinheit (16a) und die zweite Empfangseinheit (16b) ausgerichtet sind.

**6.** Sensor (10) nach einem der Ansprüche 1 bis 3, wobei die Sendeeinheit (12) eine erste Sendeuntereinheit und eine davon separate zweite Sendeuntereinheit aufweist, wobei die erste Sendeuntereinheit mit der ersten Empfangseinheit (16a) das erste Überwachungsfeld (22a) und die zweite Sendeuntereinheit mit der zweiten Empfangseinheit (16b) das zweite Überwachungsfeld (22b) aufspannt.

**7.** Anordnung einer Maschine, welche Objekte (28) mit in einer ersten Richtung geringer Ausdehnung in eine Bewegungsrichtung (30) befördert, und eines optoelektronischen Sensors (10) nach einem der vorhergehenden Ansprüche zum Zählen der Objekte (28), wobei die Überwachungsfelder (22a-b) derart orientiert und angeordnet sind, dass die in Bewegungsrichtung (30) beförderten Objekte (28) die Überwachungsfelder (22a-b) in unterschiedlichen Winkeln durchdringen.

**8.** Verfahren zur Erfassung von in einer Bewegungsrichtung (30) beförderten Objekten (28), die in einer ersten Richtung eine geringe Ausdehnung aufweisen, mittels eines optoelektronischen Sensors (10), der zwei Überwachungsfelder (22a-b) aus durch Licht erzeugten, innerhalb eines Überwachungsfeldes (22a-b) zueinander parallelen Überwachungsstrahlen (20) aufspannt und Unterbrechungen der Überwachungsstrahlen (20) und daraus die Anwesenheit eines Objekts (28) in einem Überwachungsfeld (22a-b) erkennt,
**dadurch gekennzeichnet,**
**dass** die beiden Überwachungsfelder (22a-b) in einem Winkel ($\alpha$) zueinander und zu der Bewegungsrichtung (30) stehen, so dass ein jeweiliges Objekt (28) durch beide Überwachungsfelder (22a-b) befördert wird und dabei das eine Überwachungsfeld (22a-b) mit einer anderen Orientierung durchtritt als das andere Überwachungsfeld (22b-a) und somit die erste Richtung bei Durchtritt durch zumindest eines der Überwachungsfelder (22a-b) nicht senkrecht zu den Überwachungsstrahlen (20) steht.

**9.** Verfahren nach Anspruch 8, wobei der Sensor (10) ein Sensor nach einem der Ansprüche 1 bis 6 ist.

**10.** Verfahren nach Anspruch 8 oder 9, wobei die erfassten Objekte (28) gezählt werden.

Figur 1

Figur 2

Figur 3

Figur 4

Europäisches
Patentamt

European
Patent Office

Office européen
des brevets

## EUROPÄISCHER RECHERCHENBERICHT

Nummer der Anmeldung

EP 14 15 8243

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2005/088349 A1 (REIME GERD [DE]) 22. September 2005 (2005-09-22) | 1-3,6-10 | INV. G01V8/20 |
| A | * Seite 16, Zeile 25 - Seite 17, Zeile 33; Abbildungen 6,15,16,17 * | 4,5 | |
| | ----- | | |
| A | EP 1 921 469 A2 (SICK AG [DE]) 14. Mai 2008 (2008-05-14) * Zusammenfassung * | 1-10 | |
| | ----- | | |
| A | DE 18 13 905 A1 (PAPP GEORG) 2. Juli 1970 (1970-07-02) * Anspruch 1 * | 1-10 | |
| | ----- | | |

| RECHERCHIERTE SACHGEBIETE (IPC) |
|---|
| G01V G08B F16P |

Der vorliegende Recherchenbericht wurde für alle Patentansprüche erstellt

| Recherchenort | Abschlußdatum der Recherche | Prüfer |
|---|---|---|
| Den Haag | 29. Juli 2014 | Lorne, Benoît |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

...................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 15 8243

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-07-2014

| Im Recherchenbericht angeführtes Patentdokument | Datum der Veröffentlichung | Mitglied(er) der Patentfamilie | Datum der Veröffentlichung |
|---|---|---|---|
| WO 2005088349 A1 | 22-09-2005 | AT 403168 T<br>CA 2558589 A1<br>DE 102004011780 A1<br>EP 1723446 A1<br>US 2007176777 A1<br>WO 2005088349 A1 | 15-08-2008<br>22-09-2005<br>27-10-2005<br>22-11-2006<br>02-08-2007<br>22-09-2005 |
| EP 1921469 A2 | 14-05-2008 | DE 102006053359 A1<br>EP 1921469 A2 | 15-05-2008<br>14-05-2008 |
| DE 1813905 A1 | 02-07-1970 | KEINE | |

Für nähere Einzelheiten zu diesem Anhang : siehe Amtsblatt des Europäischen Patentamts, Nr.12/82

EPO FORM P0461